# EUROPEAN PATENT APPLICATION

(11) **EP 4 325 872 A1**
(43) Date of publication of application: **21.02.2024**
(21) Application number: 22806870.6
(22) Date of filing: 16.05.2022
(51) Int. Cl.: H04N 21/44, H04N 21/442, H04N 21/472, H04N 21/475

(54) **INFORMATION DISPLAY METHOD AND APPARATUS, ELECTRONIC DEVICE, AND STORAGE MEDIUM**

(30) Priority: 14.05.2021 CN 202110530500
(71) Applicant: Beijing Zitiao Network Technology Co., Ltd., Beijing 100190 (CN)
(72) Inventor: PENG, Yidong, Beijing 100086 (CN)
(74) Representative: Dentons UK and Middle East LLP
(86) International application number: PCT/CN2022/092974
(87) International publication number: WO 2022/237908

(57) **Abstract**

Provided are an information display method and apparatus, an electronic device, and a storage medium. The method includes receiving a first triggering operation to view the detection information of a target video; in response to the first triggering operation, displaying the detection information of the target video in a video details interface of the target video, where the video details interface includes a video playback area and a detection information display area, the detection information display area displays the detection information, and the detection information includes at least one of interaction detection information or video detection information.

## Description

The present application claims priority to Chinese Patent Application No. 202110530500.6 filed with the China National Intellectual Property Administration (CNIPA) on May 14, 2021, the disclosure of which is incorporated herein by reference in its entirety.

### TECHNICAL FIELD

Embodiments of the present disclosure relate to the field of video technologies, for example, an information display method and apparatus, an electronic device, and a storage medium.

### BACKGROUND

In recent years, video application products have been favored by a majority of users. Meanwhile, more and more users have changed from video viewers to video creators, bringing joy to other users by creating videos. However, in the related technology, after video posters publish videos, the operation of viewing video detection information is onerous, making it unable to meet users' needs. Additionally, video posters cannot acquire effective video detection information and thus cannot improve video creation behavior in a timely manner. As a result, creative enthusiasm is affected.

### SUMMARY

Embodiments of the present disclosure provide an information display method and apparatus, an electronic device, and a storage medium to at least partially address problems present in the related art.

In a first aspect, an embodiment of the present disclosure provides an information display method. The method includes the steps described below.

A first triggering operation to view the detection information of a target video is received.

In response to the first triggering operation, the detection information of the target video is displayed in a video details interface of the target video. The video details interface includes a video playback area and a detection information display area. The detection information display area displays the detection information. The detection information includes at least one of interaction detection information or video detection information.

In a second aspect, an embodiment of the present disclosure also provides an information display apparatus. The apparatus includes a first reception module and an information display module.

The first reception module is configured to receive a first triggering operation to view the detection information of a target video.

The information display module is configured to, in response to the first triggering operation, display the detection information of the target video in a video details interface of the target video. The video details interface includes a video playback area and a detection information display area. The detection information display area displays the detection information. The detection information includes at least one of interaction detection information or video detection information.

In a third aspect, an embodiment of the present disclosure also provides an electronic device.

The electronic device includes at least one processor and a memory.

The memory is configured to store at least one program.

When executed by the at least one processor, the at least one program causes the at least processor to perform the information display method in embodiments of the present disclosure.

In a fourth aspect, an embodiment of the present disclosure also provides a computer-readable storage medium. The medium stores a computer program which, when executed by a processor, performs the information display method in embodiments of the present disclosure.

In a fifth aspect, an embodiment of the present disclosure also provides a computer program product that includes a computer program carried in a non-transitory computer-readable medium. When executed by a processor, the computer program performs the information display method in embodiments of the present disclosure.

### BRIEF DESCRIPTION OF DRAWINGS

The same or similar reference numerals throughout the drawings denote the same or similar elements. It should be understood that the drawings are schematic and that the originals and elements are not necessarily drawn to scale.
FIG. 1 is a flowchart of an information display method according to an embodiment of the present disclosure.
FIG. 2A is a diagram illustrating a video details interface according to an embodiment of the present disclosure.
FIG. 2B is a diagram illustrating an interaction curve according to an embodiment of the present disclosure.
FIG. 3 is a flowchart of another information display method according to an embodiment of the present disclosure.
FIG. 4 is a block diagram illustrating the structure of an information display apparatus according to an embodiment of the present disclosure.
FIG. 5 is a diagram illustrating the structure of an electronic device according to an embodiment of the present disclosure.

### DETAILED DESCRIPTION

Embodiments of the present disclosure are described hereinafter with reference to the drawings.

It should be understood that steps described in method embodiments of the present disclosure may be performed in sequence and/or in parallel. Additionally, the method embodiments may include additional steps and/or omit some of the illustrated steps. The scope of the present disclosure is not limited in this respect.

As used herein, the term "include" and variations thereof are intended to be inclusive, that is, "including, but not limited to". The term "based on" is "at least partially based on". The term "an embodiment" means "at least one embodiment"; the term "another embodiment" means "at least one another embodiment"; the term "some embodiments" means "at least some embodiments". Related definitions of other terms are given in the description hereinafter.

It should be noted that concepts such as "first" and "second" in the present disclosure are used to distinguish between apparatuses, between modules, or between units and are not intended to limit the order or mutual dependence of the functions performed by these apparatuses, modules, or units.

It should be noted that "one" and "multiple" mentioned in the present disclosure are not limiting but illustrative and should be construed by those skilled in the art as "at least one" unless otherwise specified in the context.

The names of messages or information exchanged between multiple apparatuses in the embodiments of the present disclosure are used for illustrative purposes only and are not used to limit the scope of these messages or information.

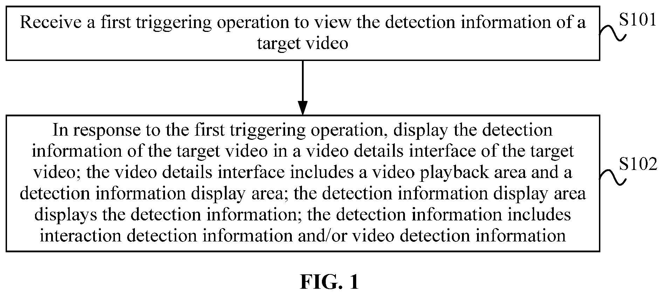

FIG. 1 is a flowchart of an information display method according to an embodiment of the present disclosure. The method may be executed by an information display apparatus. The apparatus may be implemented by software and/or hardware and may be configured in an electronic device such as a mobile phone or a tablet computer. The information display method provided by this embodiment of the present disclosure is applicable to a scenario where a video poster watches the video and views the detection information of the video after a video is posted. As shown in FIG. 1, the information display method in this embodiment may include the steps described below.

In S 101, a first triggering operation to view the detection information of a target video is received.

In an exemplary embodiment, the information display method is applied to video applications, such as a video publishing application. The target video may be a video whose detection information is to be viewed by a user. The video may be a video posted by a user, such as a short video posted by a user. The first triggering operation may be a triggering operation to view the detection information of the target video, such as an operation to trigger the detecting control in the video details interface of the target video. In this case, the detecting control may be triggered to display the detection information in the video details interface after the video details interface is entered and the current video details interface does not display the detection information. Alternatively, the first triggering operation may be a triggering operation acting on a creation center interface of a video publishing application and aiming at the target video. For example, the first triggering operation may be a click operation for video information of the target video (including a video cover, a video title, an amount of video displays, the number of video playbacks, and/or an amount of video comments). In this case, the current interface of the application is switched from the creation center interface to the video details interface and the detection information is directly displayed.

In an exemplary embodiment, a user may perform the first triggering operation to view the detection information of the target video in the video details interface of the target video. For example, when the electronic device currently displays the video details interface of the target video, such as when the electronic device displays information (such as an introduction or a comment) of the target video other than the detection information in the video details interface of the target video, the user may trigger the detecting control of the target video displayed in the video details interface when the user intends to view the detection information of the target video; accordingly, when detecting that the user triggers the detecting control in the video details interface of the target video, the electronic device may determine that the triggering operation to view the detection information of the target video is received.

In the preceding exemplary embodiments, the detecting control may be displayed only when the video displayed in the video details interface is a video posted by the user. In this case, preferably, before receiving the first triggering operation to view the detection information of the target video, the method includes the steps described below. A details viewing operation for the target video is received from a poster of the target video. In response to the details viewing operation, the video details interface of the target video is displayed, and a detecting control is displayed in the video details interface for the user to perform the first triggering operation.

The details viewing operation may be a triggering operation that instructs the electronic device to display the video details interface of a certain video, such as an operation that triggers the video name, video cover, or comment control of the video in a video browsing interface or the video homepage of a certain video or an operation that triggers the video information of a certain video posted by the user in the creation center.

Illustratively, a user watches a video in a browsing interface of an application software or the homepage of a certain video, and when the user intends to view the introduction of the video, the user triggers (such as clicking) the video title of the video; when the user intends to view the comments of a certain video or comment on the video, the user triggers (such as clicking) the comment control of the video. Accordingly, when detecting that the user triggers the video title of the video, the electronic device determines that a details viewing operation is received, displays the video details interface of the video, and displays an introduction of the video in the video details interface, and when it is determined that the user performing the details viewing operation is the poster of the video, the electronic device displays the detecting control of the video in the video details interface; when detecting that the user triggers the comment control of the video, the electronic device determines that a details viewing operation is received, displays the video details interface of the video, and displays comments of the video in the video details interface, and when it is determined that the user performing the details viewing operation is the poster of the video, the electronic device displays the detecting control of the video in the video details interface. Thus, the user (that is, the poster of the video) may trigger the detecting control displayed in the video details interface when intending to view the detection information of the video. Therefore, when detecting that the user triggers the detecting control displayed in the video details interface, the electronic device may use the video as the target video and determine that a first triggering operation to view the detection information of the target video is received.

The user may view the video information of videos posted by the user in the creation center, and when the user intends to view the video details of a certain video posted by the user, the user triggers (such as clicking) a display area of the video information of the video. Accordingly, when detecting that the user triggers the display area of the video information of a certain video posted by the user, the electronic device determines that a details viewing operation is received, displays the video details interface of the video, and displays the default information of the video and the detecting control of the video in the video details interface. Here, the default information may be an introduction, comments, or detection information, which is not limited in this embodiment.

Considering that information (such as detection information of the target video) related to the creation of the video may be what the user intends to view when the user switches to the video details interface of a video from the creation center, the default information may optionally be the detection information of the video. Thus, the displayed content is more in line with the user's needs, the operation path is shortened, and the user experience is improved. In this case, accordingly, when detecting that the user triggers the display area of the video information of a certain video posted by the user in the creation center, the electronic device may use the video as the target video and determine that a first triggering operation to view the detection information of the target video is received.

In S 102, in response to the first triggering operation, the detection information of the target video is displayed in a video details interface of the target video; the video details interface includes a video playback area and a detection information display area; the detection information display area displays the detection information; the detection information includes interaction detection information and/or video detection information.

In this embodiment, the target video may be played and the detection information of the target video may be displayed in the video details interface of the target video, without the need for the video poster to switch to one interface to view the detection information of the target video and then switch to another interface to play the target video. In this manner, operations required by the video poster to watch the target video and view the detection information of the target video can be simplified. Additionally, effective interaction detection information and/or video detection information are displayed to the video poster so that the video poster can determine clips with a good response from viewers and/or clips whose picture quality is to be improved in the target video, objectively evaluate the target video posted by the poster, and retain or modify corresponding clips of the video in a timely and targeted manner. In this manner, the user's video creation experience is improved, and the user's enthusiasm for video creation is thus enhanced.

The detection information of the target video may be information obtained from the detection of the target video for viewing by the video poster after the target video is posted. The detection information may include interaction detection information and/or video detection information of the target video. The interaction detection information of the target video may be detection information obtained by detection of the interaction of video viewers. The video detection information may be information obtained by detection of the video, such as detection information obtained by detection of a presentation state (such as display, playback, and/or playback progress) of the video or shooting quality of the video.

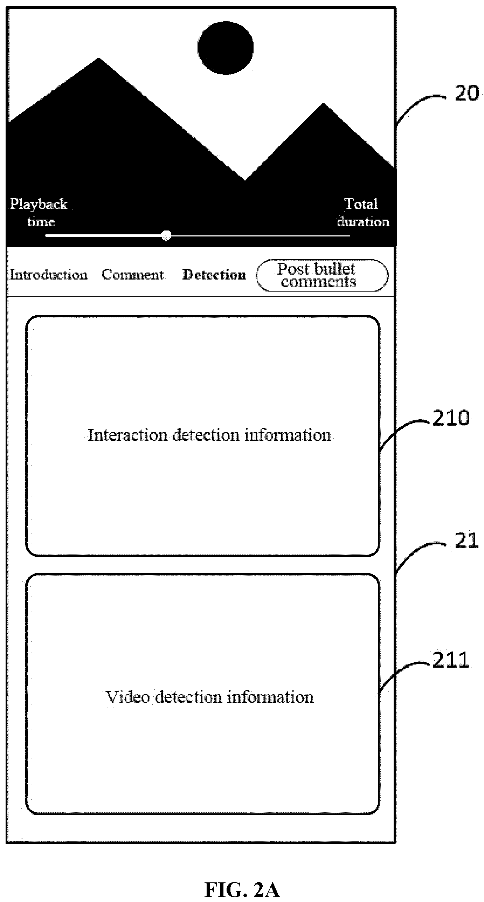

In this embodiment, as shown in FIG. 2A, a video playback area 20 and a detection information display area 21 may be disposed in the video details interface of the target video so that the electronic device may play the target video in the video playback area 20 and display the detection information of the target video in the detection information display area 21. For example, the electronic device displays interaction detection information 210 and/or video detection information 211 of the target video in the detection information display area 21.

It can be understood that when the detection information of the target video contains a lot of content and cannot be displayed in the detection information display area simultaneously, the electronic device may switch the information content of the detection information displayed in the detection information display area based on the triggering operation (for example, the up-and-down sliding operation acting on the detection information display area) of the user and may fixedly display the video playback area (that is, the video playback area is fixedly displayed in the video details interface without moving with the up-and-down sliding operation of the user) in the screen. In this manner, the user can continue to watch the target video while browsing the detection information of the target video. Thus, the user is facilitated to synchronously watch the video playing screen and browse the detection information, and the user experience is improved.

Illustratively, when receiving the first triggering operation, the electronic device may determine whether the first triggering operation acts on the video details interface of the target video, that is, the electronic device determines whether the currently displayed interface is the video details interface of the target video. In the case where it is determined that the currently displayed interface is the video details interface of the target video, the electronic device may directly display the detection information of the target video in the information display area of the details interface of the target video. In the case where it is determined that the currently displayed interface is not the video details interface of the target video, the electronic device switches the currently displayed interface to the details interface of the target video and displays the detection information of the target video in the information display area of the details interface.

In an embodiment, the interaction detection information includes interaction-type detection information corresponding to at least one interaction-type detection item, and displaying the detection information of the target video in the video details interface of the target video includes displaying an interaction detection result corresponding to each interaction-type detection item in the video details interface for each interaction-type detection item.

The interaction-type detection item may be understood as an item that needs to be detected based on the interaction-type, that is, an item that is detected for a user interaction-type corresponding to a video clip or video frame of the target video. The interaction-type includes but is not limited to an association user interaction, a guide interaction, a bullet comment interaction, and a comment interaction. The interaction-type detection item includes but is not limited to an association user interaction detection item, a guide interaction detection item, a bullet comment interaction detection item, and/or a comment interaction detection item. The interaction-type detection information corresponding to a certain interaction-type detection item may include an interaction detection result (that is, the interaction situation corresponding to the interaction-type is detected to obtain a result; when the interaction-type is the bullet comment interaction, accordingly, the interaction situation corresponding to the bullet comment interaction is detected to obtain a result) corresponding to the interaction-type detection item and may also include a video clip identifier and/or creation guide information corresponding to the interaction detection result. Alternatively, the interaction-type detection information may include association user interaction detection information (that is, detection information corresponding to the association user interaction detection item), guide interaction detection information (that is, detection information corresponding to the guide interaction detection item), bullet comment interaction detection information (that is, detection information corresponding to the bullet comment interaction detection item) and/or comment interaction detection information (that is, detection information corresponding to the comment interaction detection item). The interaction detection result may be, for example, the number of interactive persons participating in each interaction-type (such as bullet comments and comments), the number/proportion of interactive associated users, and the number of persons participating in the interaction corresponding to the guide interaction (for example, the number of persons participating in the interaction when the video poster/author adds guide stickers and oral broadcasts to the video)/the increased number of interactive persons. The detected interaction-type may also include types such as liking, collecting, and strongly recommending besides commenting and posting bullet comments. The video clip identifier may be identification information of a corresponding video clip, such as a start time node and an end time node of the corresponding video clip in the target video.

In this embodiment, after receiving the first triggering operation, the electronic device may detect each interaction-type detection item, generate an interaction detection result corresponding to the interaction-type detection item, determine a video clip identifier and/or creation guide information corresponding to the interaction detection result, and display the interaction detection result, the video clip identifier, and/or creation guide information in the video details interface of the target video. That is, the target video may be detected according to the detection information acquisition request input by the user (video poster/author) to display the detection information to the user.

Illustratively, when detection is performed for the association user interaction detection term, the electronic device may first divide the target video into multiple video clips according to a preset video clip division rule. Then, for each interaction-type (liking, collecting, or strongly recommending), the electronic device detects whether the interaction-type is an interactive type with a high amount of interaction of association users at the beginning of the video. If the total amount of interaction for the interaction-type in the first video clip of the target video is greater than the total amount of interaction for the interactive type in every other video clip, and the amount of interaction of the association users in the first video clip is greater than the amount of interaction of non-association users, it is determined that the interaction-type is an interaction-type with a high amount of interaction of association users at the beginning of the video. Therefore, after multiple interaction-types are detected, if it is detected that an interaction-type with a high amount of interaction of association users at the beginning of the video exists, an interaction detection result including multiple interaction-types and determined by detection can be generated to obtain the interaction detection information of the association user interaction detection item.

Here, the obtained interaction detection information may also include a video clip identifier corresponding to the determined interaction detection result. In this case, accordingly, when it is detected that an interaction-type with a high amount of interaction of association users at the beginning of the video exists, an interaction detection result including multiple interaction-types and determined by detection can be generated, and the video clip identifier of the first video clip in the target video is determined as the video clip identifier corresponding to the interaction detection result.

Additionally, when an interaction-type with a high amount of interaction of association users at the beginning of the video is not detected, it is possible to detect, for each interaction-type, whether the interaction-type is an interaction-type where the total amount of interaction of association users makes a great contribution. If the total amount of interaction of association users is higher than the total amount of interaction of non-association users, it is determined that the interaction-type is an interaction-type where the total amount of interaction of association users makes a great contribution, and after multiple interaction-types are detected, an interaction detection result is generated which includes at least one detected interaction-type where the total amount of interaction of association users makes a great contribution, and the interaction detection result is used as the interaction detection information of the association user interaction detection item; accordingly, if an interaction-type is not detected where the total amount of interaction of association users makes a great contribution, the interaction detection information corresponding to the association user interaction detection item may not be generated, that is, the interaction detection information corresponding to the association user interaction detection item is not displayed in the video details interface of the target video.

When detection is performed for the bullet comment interaction detection term, the electronic device may first divide the target video into multiple video clips according to a preset video clip division rule. Then, video clips with more bullet comment interaction are detected. For example, multiple video clips are sorted in a descending order according to the number of bullet comments contained in each video clip, a preset number (such as one or two) of video clips are obtained as the video clips obtained by detection according to the sorting, and an interaction detection result is generated to obtain interaction detection information of the bullet comment interaction detection item. It is considered that the number of bullet comments contained in the first video clip in the target video is greatly affected by the number of association users of the poster of the target video, which does not accurately represent viewers' liking for the video clip. Therefore, when the preceding bullet comment interaction is detected in this embodiment, it is also possible to sort only other video clips except the first video clip in the target video, select a preset number of video clips based on the sorting result, and generate an interaction detection result to obtain the interaction detection information of the bullet comment interaction detection item so that the obtained video clips are more representative.

In this embodiment, the interaction detection information of the bullet comment interaction detection item may also include a video clip identifier corresponding to the generated detection result to prompt the user for a video clip in the target video which resonates with the viewers via the interaction detection information. In this case, accordingly, when the interaction detection result corresponding to the bullet comment interaction detection item is generated, the video clip identifier of the video clip determined by detection and with a larger number of bullet comments may be determined as a video clip identifier corresponding to the interaction detection result.

In this embodiment, the video clip division rule may be configured by a developer as required. Illustratively, the video may be divided into clips according to the duration of the video. For example, when the duration of the video is less than 0.5 min, the video may not be divided, and the association user interaction and the bullet comment interaction are no longer detected. When the duration of the video is greater than or equal to 0.5 min and less than 1 min, the video may be divided into 5 video clips on average. When the duration of the video is greater than or equal to 1 min and less than 5 min, the video may be divided into 10 video clips on average. When the duration of the video is greater than or equal to 5 min, the video may be divided continuously into video clips according to the duration of 0.5 min. The duration is not limited in this embodiment.

When detection is performed for the comment interaction detection item, the proportion of the behavior of watching the target video and browsing the comment area of the target video to the behavior of watching the target video may be detected, or the proportion of the behavior of watching the target video and posting comments in the comment area of the target video to the behavior of watching the target video is detected. An example is used where the proportion of the behavior of watching the target video and browsing the comment area of the target video to the behavior of watching the target video is detected. The proportion of the number of views in the comment area to the total number of views may be calculated based on the total number of views of the target video and the number of views in the comment area that indicates playing the target video and viewing the comments of the target video, and an interaction detection result including the proportion is generated to obtain the interaction detection information of the comment interaction detection item and prompt the user via the interaction detection information. It can be understood that after the proportion of the number of views in the comment area to the total number of views is calculated, it is also possible to determine whether the proportion is greater than a first preset proportion threshold, and only when the proportion is greater than the first preset proportion threshold, the interaction detection result is generated; when the proportion is less than or equal to the first preset proportion threshold, the interaction detection result is not generated, that is, the interaction detection information corresponding to the comment interaction detection item is not displayed in the video details interface of the target video, which is not limited in this embodiment. After the interaction detection result corresponding to the comment interaction detection item is generated, the creation guide information corresponding to the interaction detection result may also be determined to guide the user. For example, the user is prompted to interact more with viewers in the comment area of the target video, which can increase the number of viewers browsing the comment area. In this case, the interaction detection information of the comment interaction detection item may include the interaction detection result corresponding to the comment interaction detection item and the creation guide information corresponding to the interaction detection result.

When detection is performed for the guide interaction detection item, an interaction promotion volume corresponding to each guide interaction may be detected based on the guide interaction received by the target video. For example, it may be detected first whether the target video contains behaviors (that is, guide interaction) such as oral broadcasts, following components, and/or stickers that guide viewers to perform interaction such as likes, bullet comments, following, comments, collections, or strong recommendations. If the target video contains no guide interaction, an interaction detection result corresponding to the guide interaction is not generated, that is, the interaction detection information corresponding to the guide interaction detection item is not displayed in the video details interface of the target video. If the target video contains guide interaction, a video clip corresponding to the guide interaction and the interaction-type guided by the guide interaction (for example, likes, bullet comments, following, comments, collections, or strong recommendations) are determined for each guide interaction, and the interaction promotion proportion of the interaction-type in the video clip corresponding to the guide interaction is calculated. If the interaction promotion proportion is greater than a set second proportion threshold (for example, 5% or 3%), the guide interaction is used as a detected guide interaction with a high interaction promotion volume. Therefore, after each guide interaction in the target video is detected, the detected guide interactions with a high interaction promotion volume may be sorted in a descending order of interaction promotion proportions, a preset number of guide interactions are used as the target guide interactions according to the sorting result, and a guide interaction detection result is generated which includes interaction-types guided by target guide interactions and the interaction promotion proportions corresponding to the target guide interactions so as to obtain the guide interaction detection information corresponding to the guide interaction detection item. Accordingly, when a guide interaction with a high interaction promotion volume is not detected, the guide interaction detection result corresponding to the guide interaction detection item may not be generated, that is, the interaction detection information corresponding to the guide interaction detection item may not be displayed in the video details interface of the target video.

The interaction detection information corresponding to the guide interaction detection item may also include a video clip identifier and/or creation guide information (for example, prompting the user to add guide interaction in the video can increase the amount of interaction for the video) corresponding to the guide interaction detection result of the guide interaction detection item. In this case, after the interaction detection result of the guide interaction is generated, the video clip identifier of the video clip corresponding to each target guide interaction may be used as the video clip identifier corresponding to the guide interaction detection result, and/or the creation guide information corresponding to the guide interaction detection result is determined. A start time node of a video clip corresponding to a guide interaction may be a time node at which the guide interaction starts guiding. An end time node of the video clip may be a time node after a preset length (such as 10s or 20s) after the guide interaction ends. The interaction promotion proportion of the guide interaction may be a proportion of the difference between the average number of interactions per second of the interaction-type guided by the guide interaction in the video clip and the average number of interactions per second of the interaction-type guided by the guide interaction in the target video to the average number of interactions per second of the interaction-type guided by the guide interaction in the target video value.

In this embodiment, the interaction detection may include positive detection or negative detection. Accordingly, the interaction detection information may include positive interaction detection information or negative interaction detection information. The positive interaction detection information may be information where the interaction (which may be an interaction situation under a certain interaction-type or an interaction situation under multiple interaction-types) corresponding to a video clip/video frame meets a certain preset condition. For example, the number of interactions exceeds a preset number (for example, the number of bullet comment interactions exceeds the preset number, or the sum of the number of bullet comments and the number of comment interactions exceeds the preset number), or the number of interactions corresponding to the video clip/video frame is ranked higher among the numbers of interactions corresponding to multiple video clips/video frames in the entire video. The negative detection information may be information where the interaction corresponding to the video clip/video frame does not meet a certain preset condition. For example, the number of the interactions does not exceed a preset number, or the number of interactions corresponding to the video clip/video frame is ranked lower among the numbers of interactions corresponding to multiple video clips/video frames in the entire video.

In an embodiment, the video detection information includes picture detection information corresponding to at least one picture detection item, and displaying the detection information of the target video in the video details interface of the target video includes displaying a picture detection result corresponding to each picture detection item, a video clip identifier corresponding to the picture detection result, and creation guide information corresponding to the picture detection result in the video details interface for each picture detection item.

The picture detection item may be an item that needs to detect the picture of the target video. The picture detection item may include a picture resolution detection item, a picture stability detection item, a picture sharpness detection item, and/or a picture content detection item. The picture detection information of a certain picture detection item may include a picture detection result corresponding to the picture detection item, a video clip identifier corresponding to the picture detection result, and the creation guide information corresponding to the picture detection result. Optionally, the picture detection information may include picture resolution detection information, picture stability detection information, picture sharpness detection information, and/or picture content detection information.

In this embodiment, after receiving the first triggering operation, the electronic device may perform detection for each picture detection item, generate a picture detection result corresponding to the picture detection item, determine a video clip identifier and creation guide information corresponding to the picture detection result, and display the picture detection result, the video clip identifier, and creation guide information in the video details interface of the target video.

Illustratively, when performing detection for the picture resolution detection item, the electronic device may acquire resolutions of multiple video frames included in the target video. If a video frame with a resolution lower than a preset resolution threshold (such as 720P) exists, a picture detection result corresponding to the picture resolution detection item is generated, a video clip identifier of at least one video clip composed of video frames with a resolution lower than the preset resolution threshold is used as a video clip identifier corresponding to the picture detection result, and the creation guide information for the picture detection result is generated to obtain the picture resolution detection information corresponding to the picture resolution detection item and remind the user that a video clip with an excessively low resolution exists in the target video via the picture resolution detection information.

When performing detection for the picture stability detection item, the electronic device may acquire picture stability degrees of multiple video frames included in the target video. If a video frame whose picture stability degree is lower than a preset stability threshold exists, a picture detection result corresponding to the picture stability detection item is generated, and at least one continuous video clip composed of video frames whose stability degrees are lower than the preset stability threshold (that is, video frames with jitter) is determined. If a target video clip whose duration is longer than a first preset duration (such as 10s) exists in at least one continuous video clip, a picture detection result corresponding to the picture stability detection item is generated, at least one target video clip is selected in a descending order of durations, the video clip identifier of the selected target video clip is used as a video clip identifier corresponding to the picture detection result, and the creation guide information for the picture detection result is generated to obtain the picture stability detection information corresponding to the picture stability detection item and remind the user that a picture jitter exists in the target video via the picture stability detection information.

When performing the detection for the picture sharpness detection item, the electronic device may acquire picture sharpness of multiple video frames included in the target video and determine at least one continuous video clip composed of video frames whose sharpness is lower than a preset sharpness threshold (that is, video frames with blurred pictures exist). If a target video clip whose duration is longer than a second preset duration (such as 10s) exists in at least one continuous video clip, a picture detection result corresponding to the picture sharpness detection item is generated, at least one target video clip is selected in a descending order of durations, the video clip identifier of the selected target video clip is used as a video clip identifier corresponding to the picture detection result, and the creation guide information for the picture detection result is generated to obtain the picture sharpness detection information corresponding to the picture sharpness detection item and remind the user that a picture blur exists in the target video via the picture sharpness detection information.

When performing the detection for the picture content detection item, the electronic device may acquire multiple video frames that contain corresponding to-be-detected content (such as a frame) in the target video and determine at least one continuous video clip composed of multiple video frames that contain corresponding to-be-detected content. If a target video clip whose duration is longer than a third preset duration (such as 10s) exists in at least one continuous video clip, a picture detection result corresponding to the picture content detection item is generated, at least one target video clip is selected in a descending order of durations, the video clip identifier of the selected target video clip is used as a video clip identifier corresponding to the picture detection result, and the creation guide information for the picture detection result is generated to obtain the picture content detection information corresponding to the content detection item and remind the user that corresponding to-be-detected content exists in the target video via the picture content detection information.

In this embodiment, the picture detection may include positive detection or negative detection. Accordingly, the picture detection information may include positive picture detection information and negative picture detection information. The positive picture detection information may be information about whether a picture of a video clip/video frame has better picture quality. For example, the resolution of the video clip/video frame exceeds a threshold, or the video clip/video frame is ranked higher in the whole picture in a descending order of picture stability/picture sharpness. The negative picture detection information may be information about whether the quality of the picture of the video clip/video frame is to be improved. For example, the resolution of the video clip/video frame is lower than a threshold, or the video clip/video frame is ranked higher in the whole picture in an ascending order of picture stability/picture sharpness.

In the information display method provided by this embodiment, a first triggering operation to view the detection information of a target video is received, and in response to the first triggering operation, the detection information of the target video is displayed in a video details interface of the target video; the video details interface is provided with a video playback area and a detection information display area, the detection information display area displays the detection information of the target video, and the detection information includes interaction detection information and/or video detection information. The preceding technical solution is adopted in this embodiment so that the video is played and the detection information of the video is displayed in the same interface, without the need for the user to switch interfaces, which can simplify the operations required by the user to watch the video posted by the user and view the detection information of the video posted by the user. Additionally, more comprehensive detection information may be displayed to the user, allowing the user to determine clips with a good response from viewers and/or clips whose picture quality is to be improved in the video the user publishes, objectively evaluate the video posted by the user, and retain or modify corresponding clips of the video in a targeted manner. In this manner, the user's video creation experience is improved, and the user's enthusiasm for video creation is thus enhanced.

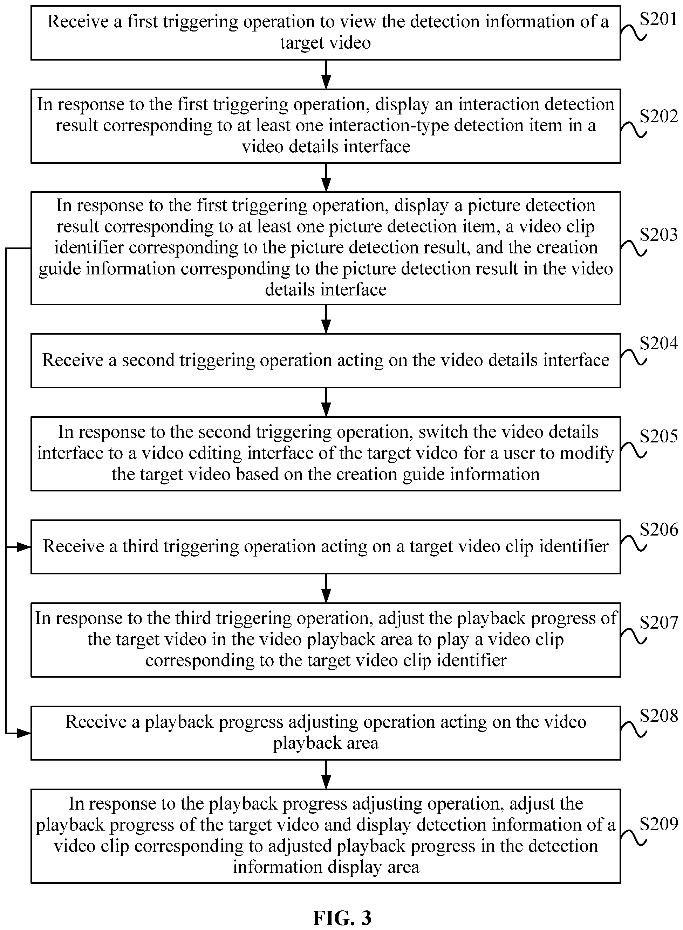

FIG. 3 is a flowchart of another information display method according to an embodiment of the present disclosure. The solution in this embodiment may be combined with at least one optional solution in the preceding embodiments. Alternatively, after displaying the detection information of the target video in the video details interface of the target video, the method also includes the steps described below. A second triggering operation acting on the video details interface is received. In response to the second triggering operation, a current interface is switched from the video details interface to a video editing interface of the target video for a user to modify the target video based on the creation guide information.

Alternatively, after displaying the detection information of the target video in the video details interface of the target video, the method also includes the steps described below. A third triggering operation acting on a target video clip identifier is received. In response to the third triggering operation, the playback progress of the target video in the video playback area is adjusted to play a video clip corresponding to the target video clip identifier.

Alternatively, after displaying the detection information of the target video in the video details interface of the target video, the method also includes the steps described below. A playback progress adjusting operation acting on the video playback area is received. In response to the playback progress adjusting operation, the playback progress of the target video is adjusted, and the detection information of a video clip corresponding to adjusted playback progress is displayed in the detection information display area.

Accordingly, as shown in FIG. 3, the information display method in this embodiment may include the steps described below.

In S201, a first triggering operation to view the detection information of a target video is received.

In S202, in response to the first triggering operation, an interaction detection result corresponding to at least one interaction-type detection item is displayed in a video details interface.

In S203, in response to the first triggering operation, a picture detection result corresponding to at least one picture detection item, a video clip identifier corresponding to the picture detection result, and the creation guide information corresponding to the picture detection result are displayed in the video details interface, and S204, S206, or S208 is performed.

It should be noted that although this embodiment is described by using an example where S202 is performed first, and S203 is performed next, such an execution sequence is merely an exemplary description. For example, when the first triggering operation is received, S203 may be performed first, and S202 may be performed next; or S203 and S204 may be executed simultaneously. The execution sequence of S203 and S204 is not limited in this embodiment.

In S204, a second triggering operation acting on the video details interface is received.

In S205, in response to the second triggering operation, a current interface is switched from the video details interface to a video editing interface of the target video for a user to modify the target video based on the creation guide information.

The second triggering operation may be a triggering operation that instructs the electronic device to display an editing interface of the target video, such as an operation to trigger the modification control in the video details interface of the target video.

An example is used where the second triggering operation is an operation to trigger the modification control in the video details interface of the target video. In the case where only one modification control corresponding to the target video is configured in the video details interface, the electronic device displays the video details interface of the target video and displays the modification control and at least one piece of detection information in the video details interface. Therefore, the user can view the picture detection result included in the picture detection information, the video clip identifier corresponding to the picture detection result, and the creation guide information corresponding to the picture detection result, and when the user intends to modify the target video, the user triggers the modification control displayed in the video details interface. Accordingly, when detecting that the user triggers the modification control of the target video, the electronic device switches the currently displayed interface from the video details interface of the target video to the editing interface of the target video for the user to modify the target video in the editing interface.

In the case where a modification control corresponding to each piece of picture detection information is provided in the video details interface, the electronic device displays the video details interface of the target video and displays the picture detection information corresponding to at least one picture detection item and the modification control corresponding to each piece of picture detection information in the video details interface. Therefore, the user can view the picture detection result included in each piece of picture detection information and the video clip identifier and creation guide information corresponding to the picture detection result, and when the user intends to modify the target video for a certain picture detection item, the user triggers the modification control corresponding to the picture detection information of the picture detection item. Accordingly, when detecting that the user triggers the modification control corresponding to a certain piece of picture detection information, the electronic device switches the currently displayed interface from the video details interface of the target video to the editing interface of the target video and furthermore automatically locates the video clip corresponding to the video clip identifier included in the picture detection information in the editing interface. Thus, the user can directly modify the video clip in the editing interface.

In S206, a third triggering operation acting on a target video clip identifier is received.

In S207, in response to the third triggering operation, the playback progress of the target video is adjusted in the video playback area to play a video clip corresponding to the target video clip identifier.

The third triggering operation may be an operation that triggers (such as clicking) a video clip identifier displayed in the details interface of the target video. The video clip identifier may be a video clip identifier included in the detection information, such as a video clip identifier included in a certain piece of interaction-type detection information and/or a video clip identifier included in a certain piece of picture detection information. Accordingly, the target video clip identifier may be a video clip identifier triggered by the third triggering operation.

In this embodiment, the user may instruct the electronic device to play the corresponding video clip by triggering the video clip identifier included in the detection information of the target video.

Illustratively, the electronic device displays the details interface of the target video, plays the target video in the video playback area of the details interface, and displays detection information of the target video in the detection information display area of the details interface. Therefore, when the user intends to view a video clip corresponding to a video clip identifier included in the detection information, the user may trigger the video clip identifier displayed in the detection information display area. Accordingly, when detecting the user triggers a video clip identifier displayed in the detection information display area, the electronic device may determine a video clip corresponding to the target video clip identifier, determine a start time node corresponding to the video clip in the target video, and adjust the playback progress of the target video played in the video playback area to the start time node to play the video clip in the video playback area.

In S208, a playback progress adjusting operation acting on the video playback area is received.

In S209, in response to the playback progress adjusting operation, the playback progress of the target video is adjusted, and detection information of a video clip corresponding to adjusted playback progress is displayed in the detection information display area.

The playback progress adjusting operation may be an operation used for instructing the electronic device to adjust the playback progress of the target video, such as a left and right sliding operation acting on the video playback area or other operations to adjust the position of the control point in the playback progress bar, where the control point corresponds to the current playback progress in the playback progress bar of the target video displayed in the video playback area; this embodiment is not limited thereto. The video clip corresponding to the adjusted playback progress may be a video clip corresponding to the video identification information contained in the detection information and containing a time node corresponding to the adjusted playback progress.

In this embodiment, when the user adjusts the playback progress of the target video, the detection information of the video clip corresponding to the adjusted playback progress may be displayed synchronously in the detection information display area so that the user can browse the detection information of the video clip while watching a video clip.

Illustratively, the electronic device plays the target video in the video playback area; when intending to adjust the playback progress of the target video, the user may execute a corresponding playback progress adjusting operation in the video playback area. Accordingly, when detecting that the user performs the playback progress adjusting operation in the video playback area, the electronic device may determine a time node corresponding to the video playback progress adjusting operation, adjust the target video in the video playback area to the time node for playback, and determine whether the time node is located in the video clip corresponding to a video clip identifier included in a certain piece of detection information (interaction detection information and/or video detection information). If the time node is located in the video clip corresponding to the video clip identifier included in a certain piece of detection information, the electronic device displays the detection information in the detection information display area; for example, the electronic device displays the detection information in a display state different from other pieces of detection information in the detection information display area; or the electronic device updates the content displayed in the detection information display area to the detection information. If the time node is not located in the video clip corresponding to the video clip identifier included in a certain piece of detection information, the content displayed in the information display area is not updated.

It can be understood that when the adjusted time node is located in the video clip corresponding to the video clip identifier included in a certain piece of detection information, it is also possible to directly display the detection information of the video clip where the time node is located on the upper layer of the video picture displayed in the video playback area without changing the content displayed in the detection information display area or the display state of the displayed content.

In an embodiment, after displaying the detection information of the target video in the video details interface of the target video, the method also includes the steps described below. A fourth triggering operation acting on the video details interface is received. In response to the fourth triggering operation, a target interaction curve is superimposed and displayed over a video picture displayed in the video playback area; the target interaction curve is used for displaying an amount of interaction corresponding to a target interaction-type at multiple time nodes of the target video.

The fourth triggering operation may be an operation that instructs the electronic device to display an interaction curve corresponding to a certain interaction-type (that is, the target interaction-type), such as an operation that clicks the interaction curve display control of a certain interactive type (that is, the target interaction-type). Accordingly, the target interaction-type may be the interaction-type corresponding to the fourth triggering operation, and the target interaction curve may be an interaction curve corresponding to an interaction-type corresponding to the fourth triggering operation, which may be an overall interaction curve corresponding to the interaction-type (that is, a curve formed by the type of interaction performed by association users and non-association users), or may be an association user interaction curve (that is, a curve formed by the type of interaction performed by association users) or a non-association user interaction curve (that is, a curve formed by the type of interaction performed by non-association users). The curve may be determined based on the user's selection operation.

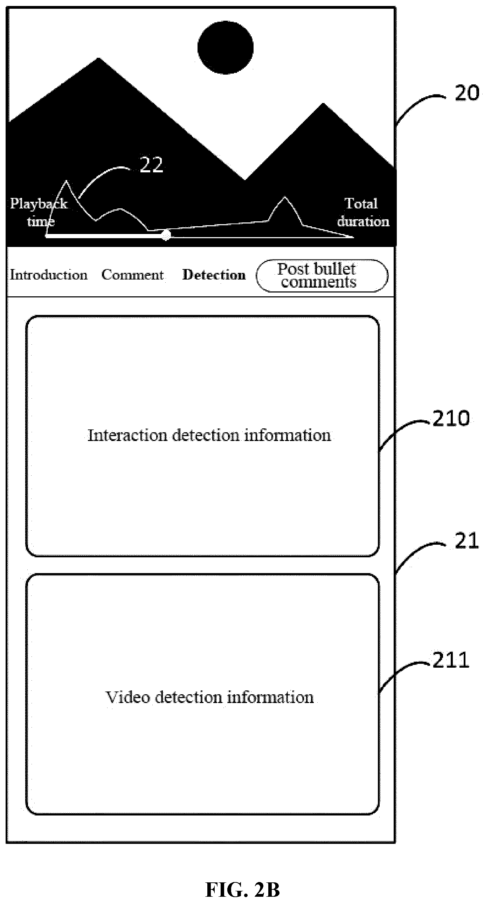

In the preceding embodiment, the user may view the interaction curve corresponding to each interaction-type. Illustratively, as shown in FIG. 2B, the electronic device plays the target video in the video playback area 20. When the user intends to view an interaction curve corresponding to an interaction-type, a triggering operation (that is, a fourth triggering operation) showing the interaction curve corresponding to the interaction-type may be performed. Accordingly, when the electronic device detects that the user performs the fourth triggering operation, a target interaction curve 22 corresponding to the fourth triggering operation may be superimposed on the upper layer of the video picture displayed in the video playback area 20.

According to the information display method of this embodiment, based on the user's triggering operations, the video details interface can be switched to the video editing interface, a video clip corresponding to a video clip identifier can be played, and/or when the user adjusts the playback progress of the target video, the detection information of the corresponding video clip is synchronously displayed. In this manner, the user's convenience in modifying videos, watching videos, or viewing detection information is improved, and the user's video creation experience is enhanced.

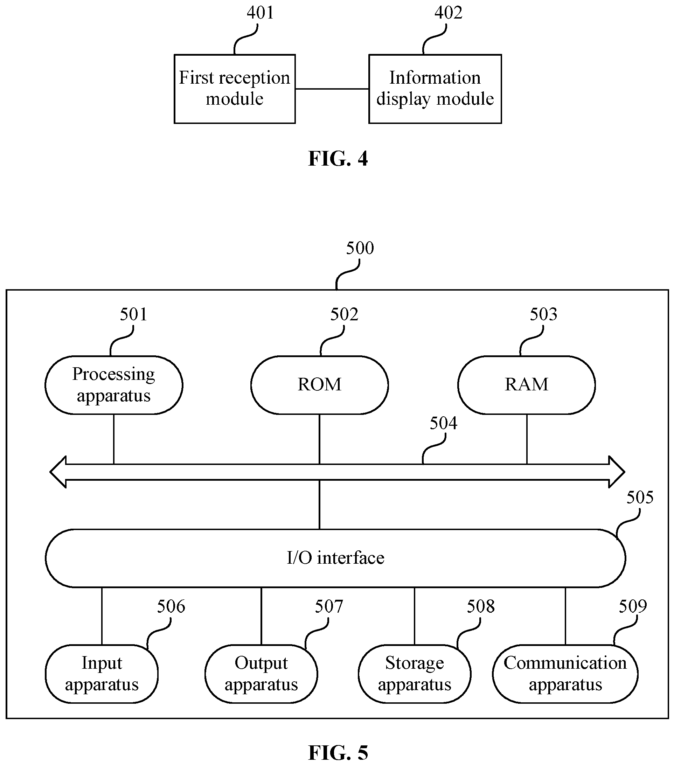

FIG. 4 is a block diagram illustrating the structure of an information display apparatus according to an embodiment of the present disclosure. The apparatus may be implemented by software and/or hardware and may be configured in an electronic device such as a mobile phone or a tablet computer. The detection information of a video may be displayed by executing the information display method. As shown in FIG. 4, the information display apparatus in this embodiment may include a first reception module 401 and an information display module 402.

The first reception module 401 is configured to receive a first triggering operation to view the detection information of a target video.

The information display module 402 is configured to, in response to the first triggering operation, display the detection information of the target video in a video details interface of the target video. The video details interface includes a video playback area and a detection information display area. The detection information display area displays the detection information. The detection information includes interaction detection information and/or video detection information.

In the information display apparatus provided by this embodiment, a first triggering operation to view the detection information of a target video is received via the first reception module, and in response to the first triggering operation via the information display module, the detection information of the target video is displayed in a video details interface of the target video; the video details interface is provided with a video playback area and a detection information display area, the detection information display area displays the detection information of the target video, and the detection information includes interaction detection information and/or video detection information. The preceding technical solution is adopted in this embodiment so that the video is played and the detection information of the video is displayed in the same interface, without the need for the user to switch interfaces, which can simplify the operations required by the user to watch the video posted by the user and view the detection information of the video posted by the user. Additionally, more comprehensive detection information may be displayed to the user, allowing the user to determine clips with a good response from viewers and/or clips whose picture quality is to be improved in the video the user publishes, objectively evaluate the video posted by the user, and retain or modify corresponding clips of the video in a targeted manner. In this manner, the user's video creation experience is improved, and the user's enthusiasm for video creation is thus enhanced.

In the preceding solution, the interaction detection information may include interaction-type detection information corresponding to at least one interaction-type detection item, and the information display module 402 may be configured to display an interaction detection result corresponding to each interaction-type detection item in the video details interface for each interaction-type detection item.

In the preceding solution, the video detection information may include picture detection information corresponding to at least one picture detection item, and the information display module 402 may be configured to display a picture detection result corresponding to each picture detection item, a video clip identifier corresponding to the picture detection result, and creation guide information corresponding to the picture detection result in the video details interface for each picture detection item.

In the preceding solution, at least one picture detection item includes a picture resolution detection item, a picture stability detection item, a picture sharpness detection item, or a picture content detection item; the picture detection information includes picture resolution detection information, picture stability detection information, picture sharpness detection information, or picture content detection information.

Alternatively, the information display apparatus in this embodiment may also include a second reception module and a switch module. The second reception module is configured to receive a second triggering operation acting on the video details interface after the detection information of the target video is displayed in the video details interface of the target video. The switch module is configured to switch a current interface from the video details interface to a video editing interface of the target video in response to the second triggering operation for a user to modify the target video based on the creation guide information.

Alternatively, the information display apparatus in this embodiment may also include a third reception module and a first progress adjustment module. The third reception module is configured to receive a third triggering operation acting on a target video clip identifier after the detection information of the target video is displayed in the video details interface of the target video. The first progress adjustment module is configured to adjust the playback progress of the target video in the video playback area in response to the third triggering operation to play a video clip corresponding to the target video clip identifier.

Alternatively, the information display apparatus in this embodiment may also include a fourth reception module and a second progress adjustment module. The fourth reception module is configured to receive a playback progress adjusting operation acting on the video playback area after the detection information of the target video is displayed in the video details interface of the target video. The second progress adjustment module is configured to, in response to the playback progress adjusting operation, adjust the playback progress of the target video and display the detection information of a video clip corresponding to adjusted playback progress in the detection information display area.

Alternatively, the information display apparatus in this embodiment may also include a fifth reception module and a curve display module. The fifth reception module is configured to receive a fourth triggering operation acting on the video details interface after the detection information of the target video is displayed in the video details interface of the target video. The curve display module is configured to superimpose and display a target interaction curve over a video picture displayed in the video playback area in response to the fourth triggering operation; the target interaction curve is used for displaying an amount of interaction corresponding to a target interaction-type at multiple time nodes of the target video.

Alternatively, the information display apparatus in this embodiment may also include a sixth reception module and a control display module. The sixth reception module is configured to receive a details viewing operation for the target video from a poster of the target video before the first triggering operation to view the detection information of the target video is received. The control display module is configured to, in response to the details viewing operation, display the video details interface of the target video and display a detecting control in the video details interface for the user to perform the first triggering operation.

The information display apparatus provided by embodiments of the present disclosure may execute the information display method provided by any embodiment of the present disclosure and has corresponding functional modules for executing the information display method. For technical details not described in detail in this embodiment, reference may be made to the information display method according to any embodiment of the present disclosure.

With reference to FIG. 5, FIG. 5 shows a diagram illustrating the structure of an electronic device (such as a terminal device) 500 applicable to implementing embodiments of the present disclosure. The terminal device in embodiments of the present disclosure may include but is not limited to, a mobile terminal such as a mobile phone, a laptop, a digital broadcast receiver, a personal digital assistant (PDA), a PAD, a portable media player (PMP), and a vehicle-mounted terminal (for example, a vehicle-mounted navigation terminal) and a fixed terminal such as a digital TV, and a desktop computer. The electronic device shown in FIG. 5 is merely an example and should not impose any limitation on the function and usage scope of embodiments of the present disclosure.

As shown in FIG. 5, the electronic device 500 may include a processing apparatus 501 (such as a central processing unit or a graphics processor). The processing apparatus 501 may perform various appropriate actions and processing according to a program stored in a read-only memory (ROM) 502 or a program loaded into a random access memory (RAM) 503 from a storage apparatus 508. The RAM 503 also stores various programs and data required for the operation of the electronic device 500. The processing apparatus 501, the ROM 502, and the RAM 503 are connected to each other through a bus 504. An input/output (I/O) interface 505 is also connected to the bus 504.

Generally, the following apparatus may be connected to the I/O interface 505: an input apparatus 506 such as a touch screen, a touch pad, a keyboard, a mouse, a camera, a microphone, an accelerometer, and a gyroscope; an output apparatus 507 such as a liquid crystal display (LCD), a speaker, and a vibrator; a storage apparatus 506 such as a magnetic tape and a hard disk; and a communication apparatus 509. The communication apparatus 509 may allow the electronic device 500 to perform wireless or wired communication with other devices to exchange data. FIG. 5 shows the electronic device 500 having various apparatuses, but it should be understood that it is not necessary to implement or be equipped with all the shown apparatuses. Alternatively, the electronic device 500 may implement or be equipped with more or fewer apparatuses.

Specifically, according to embodiments of the present disclosure, the process described above with reference to the flowchart may be implemented as a computer software program. For example, embodiments of the present disclosure include a computer program product. The computer program product includes a computer program carried in a non-transitory computer-readable medium. The computer program includes program codes for performing the method shown in the flowchart. In such an embodiment, the computer program may be downloaded and installed from the network via the communication apparatus 509, may be installed from the storage apparatus 506, or may be installed from the ROM 502. When the computer program is executed by the processing apparatus 501, the preceding functions defined in the methods of the embodiments of the present disclosure are performed.

It is to be noted that the preceding computer-readable medium of the present disclosure may be a computer-readable signal medium, a computer-readable storage medium, or any combination of the computer-readable signal medium and the computer-readable storage medium. The computer-readable storage medium may be, but is not limited to, an electrical, magnetic, optical, electromagnetic, infrared, or semiconductor system, apparatus, or device, or any combination thereof. Examples of the computer-readable storage medium may include, but are not limited to, an electrical connection with one or more wires, a portable computer disk, a hard disk, a RAM, a ROM, an erasable programmable read-only memory (EPROM or flash memory), an optical fiber, a portable compact disc read-only memory (CD-ROM), an optical storage device, a magnetic storage device, or any appropriate combination thereof. In the present disclosure, the computer-readable storage medium may be any tangible medium including or storing a program. The program may be used by or used in conjunction with an instruction execution system, apparatus, or device. In the present disclosure, the computer-readable signal medium may include a data signal propagated on a base band or as a part of a carrier wave. Computer-readable program codes are carried in the data signal. Such propagated data signals may take a variety of forms, including, but not limited to, electromagnetic signals, optical signals, or any suitable combination thereof. The computer-readable signal medium may also be any computer-readable medium other than a computer-readable storage medium. The computer-readable signal medium may send, propagate, or transmit a program used by or in conjunction with an instruction execution system, apparatus, or device. The program codes contained on the computer-readable medium may be transmitted on any suitable medium, including, but not limited to, a wire, an optical cable, radio frequency (RF), or any suitable combination thereof.

In some embodiments, the client and the server may communicate by using any currently known or future-developed network protocol such as Hypertext Transfer Protocol (HTTP) and may be interconnected by any form or medium of digital data communication (for example, a communication network). Examples of the communication network include a local area network (LAN), a wide area network (WAN), an interconnected network (for example, the Internet), an end-to-end network (for example, an ad hoc end-to-end network), and any currently known or future-developed network.

The preceding computer-readable medium may be included in the preceding electronic device or may exist alone without being assembled into the electronic device.

The preceding computer-readable medium carries at least one program. When executing the at least one program, the electronic device performs the steps described below. A first triggering operation to view the detection information of a target video is received. In response to the first triggering operation, the detection information of the target video is displayed in a video details interface of the target video. The video details interface includes a video playback area and a detection information display area. The detection information display area displays the detection information. The detection information includes interaction detection information and/or video detection information.

Computer program codes for performing the operations in the present disclosure may be written in one or more programming languages or a combination thereof. The preceding one or more programming languages include but are not limited to object-oriented programming languages such as Java, Smalltalk, and C++, as well as conventional procedural programming languages such as "C" or similar programming languages. The program codes may be executed entirely on a user computer, partly on a user computer, as a stand-alone software package, partly on a user computer and partly on a remote computer, or entirely on a remote computer or a server. In the case relating to a remote computer, the remote computer may be connected to a user computer via any kind of network including a LAN or a WAN, or may be connected to an external computer (for example, via the Internet by an Internet service provider).

The flowcharts and block diagrams in the drawings show possible architectures, functions, and operations of the system, method, and computer program product according to the multiple embodiments of the present disclosure. In this regard, each block in the flowcharts or block diagrams may represent a module, a program segment, or part of codes that include at least one executable instruction for implementing specified logical functions. It is also to be noted that in some alternative implementations, the functions marked in the blocks may occur in an order different from those marked in the drawings. For example, two successive blocks may, in fact, be executed substantially in parallel or in a reverse order, which depends on the functions involved.

It is also to be noted that each block of the block diagrams and/or flowcharts and combinations of blocks in the block diagrams and/or flowcharts may be implemented by not only a specific-purpose hardware-based system that performs a specified function or action, but also a combination of specific-purpose hardware and computer instructions.

The described units involved in the embodiments of the present disclosure may be implemented by software or hardware. The name of a module is not intended to limit the unit in a certain circumstance.

The functions described herein above may be performed at least in part by at least one hardware logic component. For example, without limitation, exemplary types of hardware logic components that may be used include Field Programmable Gate Array (FPGA), Application Specific Integrated Circuit (ASIC), Application Specific Standard Product (ASSP), System on Chips (SOC), and Complex Programmable Logical device (CPLD).

In the context of the present disclosure, a machine-readable medium may be a tangible medium that may contain or store a computer program for use by or in conjunction with an instruction execution system, apparatus, or device. The machine-readable medium may be a machine-readable signal medium or a machine-readable storage medium. The machine-readable medium may include, but is not limited to, an electronic, magnetic, optical, electromagnetic, infrared, or semiconductor system, apparatus, or device, or any suitable combination thereof. Examples of the machine-readable storage medium may include an electrical connection based on one or more wires, a portable computer disk, a hard disk, a RAM, a ROM, an EPROM or flash memory, an optical fiber, a CD-ROM, an optical storage device, a magnetic storage device, or any appropriate combination thereof.

According to at least one embodiment of the present disclosure, example 1 provides an information display method. The method includes the steps described below.

A first triggering operation to view the detection information of a target video is received.

In response to the first triggering operation, the detection information of the target video is displayed in a video details interface of the target video. The video details interface includes a video playback area and a detection information display area. The detection information display area displays the detection information. The detection information includes interaction detection information and/or video detection information.

According to at least one embodiment of the present disclosure, example 2 includes the following according to the method described in example 1: the interaction detection information includes interaction-type detection information corresponding to at least one interaction-type detection item, and displaying the detection information of the target video in the video details interface of the target video includes displaying an interaction detection result corresponding to the each interaction-type detection item in the video details interface for each interaction-type detection item.

According to at least one embodiment of the present disclosure, example 3 includes the following according to the method described in example 1: the video detection information includes picture detection information corresponding to at least one picture detection item, and displaying the detection information of the target video in the video details interface of the target video includes displaying a picture detection result corresponding to the each picture detection item, a video clip identifier corresponding to the picture detection result, and creation guide information corresponding to the picture detection result in the video details interface for each picture detection item.

According to at least one embodiment of the present disclosure, example 4 includes the following according to the method described in example 3: at least one picture detection item includes a picture resolution detection item, a picture stability detection item, a picture sharpness detection item, or a picture content detection item; the picture detection information includes picture resolution detection information, picture stability detection information, picture sharpness detection information, or picture content detection information.

According to at least one embodiment of the present disclosure, example 5 includes the following according to the method described in example 3: displaying the detection information of the target video in the video details interface of the target video includes receiving a second triggering operation acting on the video details interface; in response to the second triggering operation, switching a current interface from the video details interface to a video editing interface of the target video for a user to modify the target video based on the creation guide information.

According to at least one embodiment of the present disclosure, example 6 includes the following according to the method described in any of examples 2 to 5: after displaying the detection information of the target video in the video details interface of the target video, the method also includes receiving a third triggering operation acting on a target video clip identifier; in response to the third triggering operation, adjusting playback progress of the target video in the video playback area to play a video clip corresponding to the target video clip identifier.

According to at least one embodiment of the present disclosure, example 7 includes the following according to the method described in any of examples 1 to 5: after displaying the detection information of the target video in the video details interface of the target video, the method also includes receiving a playback progress adjusting operation acting on the video playback area; in response to the playback progress adjusting operation, adjusting playback progress of the target video, and displaying detection information of a video clip corresponding to adjusted playback progress in the detection information display area.

According to at least one embodiment of the present disclosure, example 8 includes the following according to the method described in any of examples 1 to 5: after displaying the detection information of the target video in the video details interface of the target video, the method also includes receiving a fourth triggering operation acting on the video details interface; in response to the fourth triggering operation, superimposing and displaying a target interaction curve over a video picture displayed in the video playback area, where the target interaction curve is used for displaying an amount of interaction corresponding to a target interaction-type at multiple time nodes of the target video.

According to at least one embodiment of the present disclosure, example 9 includes the following according to the method described in any of examples 1 to 5: before receiving the first triggering operation to view the detection information of the target video, the method also includes receiving a details viewing operation for the target video from a poster of the target video; in response to the details viewing operation, displaying the video details interface of the target video, and displaying a detecting control in the video details interface for the user to perform the first triggering operation.

According to at least one embodiment of the present disclosure, example 10 provides an information display apparatus. The apparatus includes a first reception module and an information display module.

The first reception module is configured to receive a first triggering operation to view the detection information of a target video.

The information display module is configured to, in response to the first triggering operation, display the detection information of the target video in a video details interface of the target video.

The video details interface includes a video playback area and a detection information display area. The detection information display area displays the detection information. The detection information includes at least one of interaction detection information or video detection information.

According to at least one embodiment of the present disclosure, example 11 provides an electronic device.

The electronic device includes at least one processor and a memory.

The memory is configured to store at least one program.

When executed by the at least one processor, the at least one program causes the at least one processor to perform the information display method of any one of examples 1 to 9.

According to at least one embodiment of the present disclosure, example 12 provides a computer-readable storage medium storing a computer program. The computer program, when executed by a processor, performs the information display method of any one of examples 1 to 9.

Additionally, although multiple operations are described in a particular order, it is not a must to perform these operations in this particular order or in sequential order. In a certain environment, multitasking and parallel processing may be advantageous. Similarly, although multiple implementation details are included in the preceding discussion, these should not be construed as limiting the scope of the present disclosure. Some features described in the context of separate embodiments may be implemented in combination in a single embodiment. Rather, features described in the context of a single embodiment may be implemented in multiple embodiments individually or in any suitable sub-combination.

Although the subject matter is described in language specific to structural features and/or methodological acts, it is to be understood that the subject matter defined in the appended claims is not necessarily limited to the preceding features or acts. Rather, the specific features and acts described above are merely example forms of implementing the claims.

## Claims

1. An information display method, comprising:
receiving a first triggering operation to view detection information of a target video; and
in response to the first triggering operation, displaying the detection information of the target video in a video details interface of the target video, wherein the video details interface comprises a video playback area and a detection information display area, the detection information display area displays the detection information, and the detection information comprises at least one of interaction detection information or video detection information.

2. The method of claim 1, wherein the interaction detection information comprises interaction-type detection information corresponding to at least one interaction-type detection item, and displaying the detection information of the target video in the video details interface of the target video comprises:
displaying an interaction detection result corresponding to each interaction-type detection item of the at least one interaction-type detection item in the video details interface for each interaction-type detection item.

3. The method of claim 1, wherein the video detection information comprises picture detection information corresponding to at least one picture detection item, and displaying the detection information of the target video in the video details interface of the target video comprises:
displaying, for each picture detection item, a picture detection result corresponding to each picture detection item of the at least one picture detection item, a video clip identifier corresponding to the picture detection result, and creation guide information corresponding to the picture detection result in the video details interface.

4. The method of claim 3, wherein the at least one picture detection item comprises a picture resolution detection item, a picture stability detection item, a picture sharpness detection item, or a picture content detection item; and the picture detection information comprises picture resolution detection information, picture stability detection information, picture sharpness detection information, or picture content detection information.

5. The method of claim 3, wherein after displaying the detection information of the target video in the video details interface of the target video, the method further comprises:
receiving a second triggering operation acting on the video details interface; and
in response to the second triggering operation, switching the video details interface to a video editing interface of the target video for a user to modify the target video based on the creation guide information.

6. The method of any one of claims 3 to 5, wherein after displaying the detection information of the target video in the video details interface of the target video, the method further comprises:
receiving a third triggering operation acting on the video clip identifier of the target video; and
in response to the third triggering operation, adjusting playback progress of the target video in the video playback area to play a video clip corresponding to the video clip identifier.

7. The method of any one of claims 1 to 5, wherein after displaying the detection information of the target video in the video details interface of the target video, the method further comprises:
receiving a playback progress adjusting operation acting on the video playback area; and
in response to the playback progress adjusting operation, adjusting playback progress of the target video, and displaying detection information of a video clip corresponding to adjusted playback progress in the detection information display area.

8. The method of any one of claims 1 to 5, wherein after displaying the detection information of the target video in the video details interface of the target video, the method further comprises:
receiving a fourth triggering operation acting on the video details interface; and
in response to the fourth triggering operation, displaying a target interaction curve over a video picture being displayed in the video playback area, wherein the target interaction curve is used for displaying an amount of interaction corresponding to a target interaction-type at a plurality of time nodes of the target video.

9. The method of any one of claims 1 to 5, wherein before receiving the first triggering operation to view the detection information of the target video, the method further comprises:
receiving a details viewing operation for the target video from a poster of the target video; and
in response to the details viewing operation, displaying the video details interface of the target video, and displaying a detecting control in the video details interface for the user to perform the first triggering operation.

10. An information display apparatus, comprising:
a first reception module configured to receive a first triggering operation to view detection information of a target video; and
an information display module configured to, in response to the first triggering operation, display the detection information of the target video in a video details interface of the target video, wherein the video details interface comprises a video playback area and a detection information display area, the detection information display area displays the detection information, and the detection information comprises at least one of interaction detection information or video detection information.

11. An electronic device, comprising:
at least one processor; and
a memory configured to store at least one program;
wherein when executed by the at least one processor, the at least one program causes the at least one processor to perform the information display method of any one of claims 1 to 9.

12. A computer-readable storage medium storing a computer program which, when executed by a processor, performs the information display method of any one of claims 1 to 9.

13. A computer program product, comprising a computer program carried in a non-transitory computer-readable medium, wherein when executed by a processor, the computer program performs the information display method of any one of claims 1 to 9.
